# EUROPEAN PATENT SPECIFICATION

(11) **EP 4 031 442 B1**
(45) Date of publication and mention of the grant of the patent: **13.11.2024**
(21) Application number: 20864404.7
(22) Date of filing: 25.08.2020
(51) Int. Cl.: B62K 3/02, A63B 69/16, B62K 3/00, B62M 1/36, B62M 6/40

(54) **DEVICE FOR ADJUSTING THE DISTANCE BETWEEN A PEDAL MODULE AND A SEAT**
VORRICHTUNG ZUR EINSTELLUNG DES ABSTANDES ZWISCHEN EINEM PEDALMODUL UND EINEM SITZ
DISPOSITIF DE RÉGLAGE DE LA DISTANCE ENTRE UN MODULE DE PÉDALE ET UN SIÈGE

(30) Priority: 20.09.2019 NO 20191142
(43) Date of publication of application: 27.07.2022
(73) Proprietor: PODBIKE AS, 4031 Stavanger (NO)
(72) Inventor: SØRENSEN, Per Hassel, 4307 Sandnes (NO)
(74) Representative: Håmsø Patentbyrå AS
(86) International application number: PCT/NO2020/050213
(87) International publication number: WO 2021/054834

(56) References cited:
- WO-A1-2014/094888
- WO-A1-2015/039127
- WO-A1-2018/199772
- WO-A1-2018/199772
- NL-C2- 1 002 192
- US-A1- 2009 066 054
- US-A1- 2014 346 752
- ANONYMOUS: "Will be a long wait .....", RULLEROLF 45266726, 31 January 2018 (2018-01-31), pages 1 - 15, XP055895182, Retrieved from the Internet <URL:http://rullerolf.blogspot.com/2018/01> [retrieved on 20220224]

## Description

The present invention relates to a device for adjusting the distance between a pedal module and a seat of a human-powered vehicle. Also, the present invention relates to a human-powered vehicle comprising said device.

Nowadays, several types of human-powered vehicles have pedals provided in front of the user's seat. Examples of this design are recumbent bicycles or velomobiles. In these vehicles, there is often a need to adjust the distance between the pedals and the seat, so that a range of body sizes may be comfortably accommodated.

One approach for solving the pedal-seat distance problem is to provide a fixed seat and then adjust the position of the pedals relative to the fixed seat. This is particularly useful for human-powered vehicles such as recumbent bicycles or velomobiles. However, it can be challenging for such a solution to handle forces from heavy pedalling and to avoid adding too much weight to the vehicle.

A known solution for adjusting the pedal-seat distance is observed in motorized vehicles with strict requirements for mechanical strength, such as racing or off-road cars. In these cases, the seat is typically fixed, and the pedals are movable. However, in practice it is observed that these solutions only allow a limited range adjustment. Also, the main focus in these solutions has been on strength and robustness during high energy impacts and not on flexibility to account for a wide range of human sizes. In human-powered vehicles such as recumbent bicycles and velomobiles, this low level of configurability is undesirable.

A further approach for the adjustment of the pedal-seat distance is observed in most everyday cars. Typically, the pedals are provided at a fixed position in the car and it is the seat which may be moved. This is achieved by sliding the seat over two parallel guide rails fixed to the vehicle and providing a plurality of lockable positions for the seat along the guide rail. However, this solution is also seen to have several problems. Even though the guide rails used in cars are made of rolled steel profiles, which achieve a good strength for the rails and provide a good surface for sliding the seat, these solutions typically weight several kilograms per seat. This is not suitable for human-powered vehicles such as recumbent bicycles and velomobiles. An example of this known approach is shown in WO 2018199772 A1, in particular figures 1 to 3 and the corresponding description together with claims 1 to 3. Even in a single occupancy human-powered vehicle with electric assistance, a weight much above 50kg is difficult to use on the existing bike infrastructure. A much more lightweight solution is needed to keep total vehicle mass at an acceptable level.

The present invention will now be disclosed.

According to a first aspect of the present invention, there is provided a device for adjusting the distance between a pedal module and a seat of a human-powered vehicle, the device comprising: a guide rail adaptable to be fixed relative to the seat; and a sliding piece for supporting the pedal module. The sliding piece is adapted to slide on the guide rail, and the sliding piece is lockable to the guide rail on at least one position of the guide rail.

The guide rail may include a channel having an elongated surface for the sliding piece to slide on. Also, the channel may include two lateral surfaces sloped inwardly with an angle between 10 and 60 degrees such that the channel embraces the sliding piece.

The guide rail comprises a perforation, and the sliding piece comprises an outward facing protrusion for fastening the sliding piece to the perforation's position on the guide rail. Also, the outward facing protrusion is positioned on the sliding piece so as to be inserted into the perforation due to an increase in distance between the sliding piece and a slidable surface of the guide rail. Moreover, the perforation may have a wider edge facing the outward facing protrusion.

The device may include a threaded fastener for engaging corresponding threads on the sliding piece and actuate on a slidable surface of the guide rail, so that the distance between the sliding piece and the slidable surface is adjustable by the threaded fastener. Also, the threaded fastener may include a circular base with a surface for both sliding and rotating on the guide rail, and the circular base may include a conical surface for sliding against a lateral surface of the guide rail.

The sliding piece may include a fixed axis for pivoting a bracket adaptable to support the pedal module. Also, the sliding piece may have two inward facing protrusions, each protrusion being adapted to couple a corresponding hollow space in the bracket so as to provide the fixed axis for pivoting. Moreover, for each inward facing protrusion, the sliding piece may include an outward facing protrusion as described above, each pair of inward and outward facing protrusions being coupled by a shared core.

The circular base may include a helical cut-out for providing a resting surface for the bracket so that the rotation of the threaded fastener also adjusts a distance between the bracket and the guide rail. Also, the thread fastener may include threads having the same screwing pitch as the screwing pitch of the helical cut-out.

The guide rail may be adaptable to be fixed to the vehicle so that it is fixed relative to the seat.

The pedal module may include two pedals for cycling, and it may also include an electrical generator for converting a cycling motion from the two pedals to electricity.

According to a second aspect of the invention, there is provided a human-powered vehicle comprising a device as described above. Also, according to a third aspect of the invention, there is provided a velomobile or a recumbent bicycle comprising a device as described above.

Embodiments of the invention will now be described, by way of example only, with reference to the accompanying drawings, in which:
- Figures 1A, 1B, 1C: are perspective, elevation and plan views of a device embodiment;
- Figures 2A, 2B: are perspective and cross-sectional views of a guide rail embodi-ment;
- Figures 3A, 3B, 3C: are perspective, elevation and cross-sectional views of a device embodiment, particularly revealing a sliding piece inside of a chan-nel in a guide rail;
- Figures 4A, 4B: are perspectives views of a threaded fastener with a sliding piece not hidden and hidden, respectively.

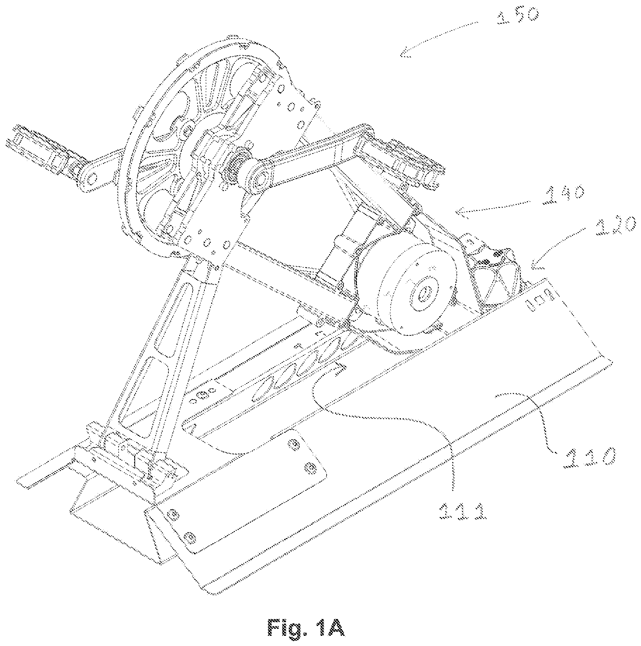

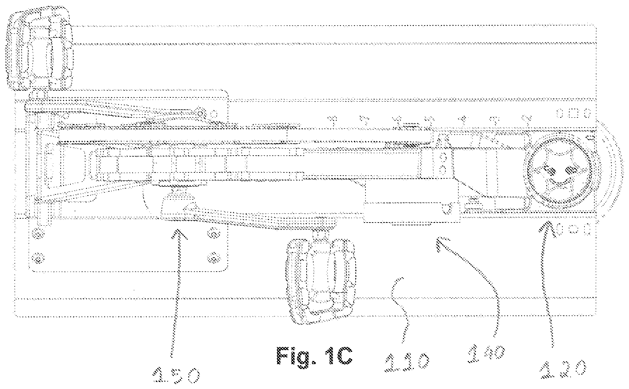

Figures 1A-1C show a device embodiment from several views. This device can be installed in a human-powered vehicle such as a recumbent bicycle or a velomobile, and the device allows adjusting the distance between the pedal module 150 and a seat (not shown) fixed to the human-powered vehicle. For example, the device can be fixed to the vehicle so that this results in the device being fixed relative to the fixed seat.

The device includes a guide rail 110 and a sliding piece 120 (not directly visible in Figs. 1A-1C) for sliding along the guide rail 150 and changing the position of the pedal module 150.

The device is operated to change the position of the pedal module 150 by actuating on the mechanical linkage that supports the pedal module 150. The bracket 140 connects the sliding piece 120 with the pedal module 150. As the sliding piece 120 is moved along the guide rail 110, the pedal module 150 changes position and thus the distance between the pedal module 150 and the fixed seat in the vehicle is adjusted.

The sliding piece 120 has two modes of operation: an unlocked mode, in which it is free to be moved along the guide rail 110; and a locked mode, in which the movements along the guide rail 110 are restricted from happening.

The guide rail 110 includes the channel 111 with an elongated surface for the sliding piece 120 to slide on. This surface is also referred to as slidable surface. On the lefthand side of Figure 1A it is possible to observe the cross-sectional profile of the channel 111, which shows two lateral surfaces sloped inwardly. The sliding piece 120 is thus embraced laterally by the channel 111 and constricted by the channel's 111 structure to perform longitudinal movements along the channel 111.

In the embodiments shown in the figures, the pedal module 150 has two pedals for cycling and an electrical generator for converting a cycling motion from the two pedals to electricity. However, other pedal modules could also be used with the device.

Once the distance between the pedal module 150 and the seat has been adjusted, the device must be locked in place so that the user may use the pedal module according to its purpose. In a situation such as the one show in the Figures, the pedal module 150 may be a target of forces from heavy pedalling. It is therefore necessary to provide that the sliding piece 120 is lockable to the guide rail 110 on at least one position of the guide rail 110. This aspect of the invention will be explained in more detail throughout the following description.

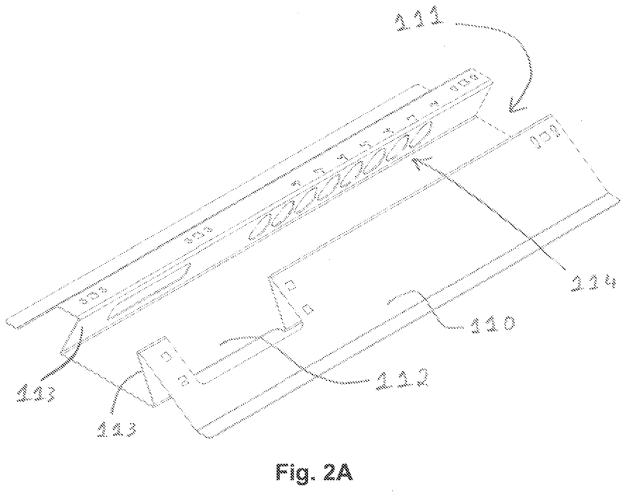

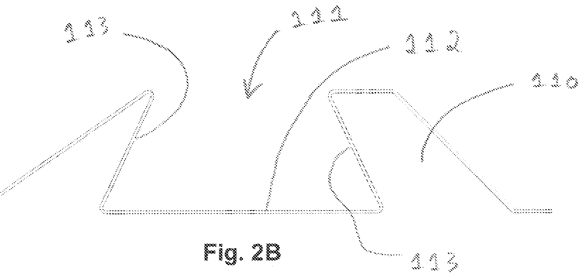

Figures 2A and 2B show the guide rail 110 in more detail. The guide rail 110 includes the longitudinal channel 111 with an elongated surface 112 for the sliding piece 120 to slide on. The channel also includes two lateral surfaces 113 sloped inwardly such that the channel 111 embraces the sliding piece 120 when the latter is positioned to slide on the slidable surface 112. In one embodiment, the lateral surfaces 113 are sloped at an angle between 10 and 60 degrees.

The lateral surfaces 113 of the channel 111 also include a few perforations 114. These are used for locking the sliding piece 120 on the corresponding positions along the guide rail 110. The locking interaction will be explained in further detail while describing the remaining figures.

Also, the inclination of lateral surfaces 113 shown in Figure 2B may vary. In one embodiment, the lateral surfaces 113 have symmetrical inclinations. In another embodiment, one lateral surface 113 has a fixed angle and the other has a flexible angle that may be adjusted for providing different locking performances. In a further embodiment, the distance between the lateral surfaces 113 at their base is fixed but the distance at top can be adjusted.

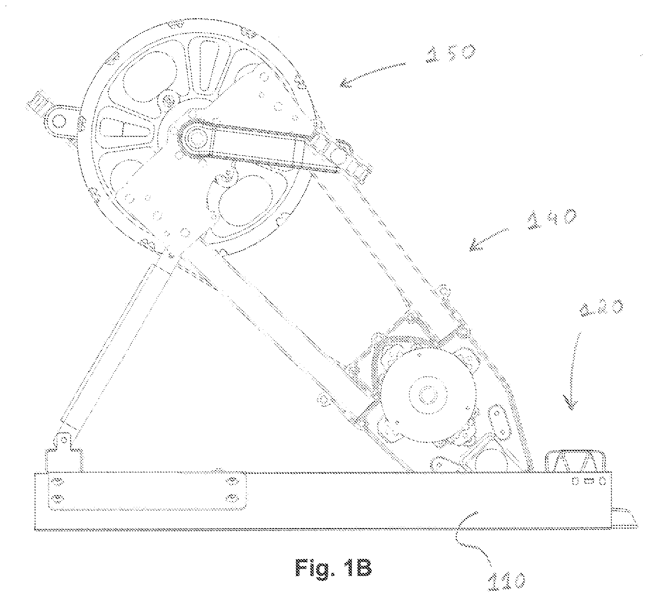

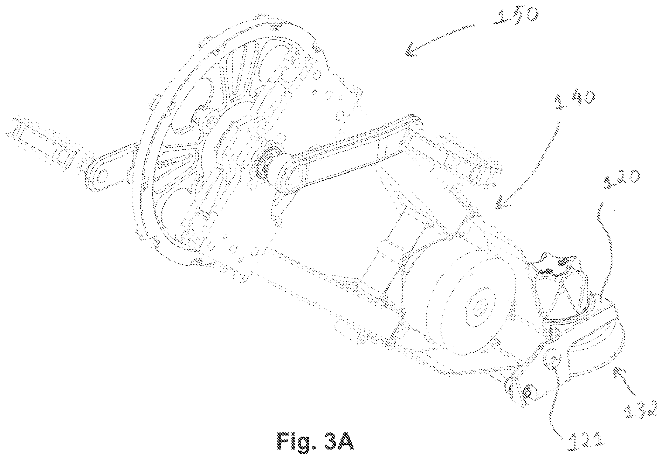

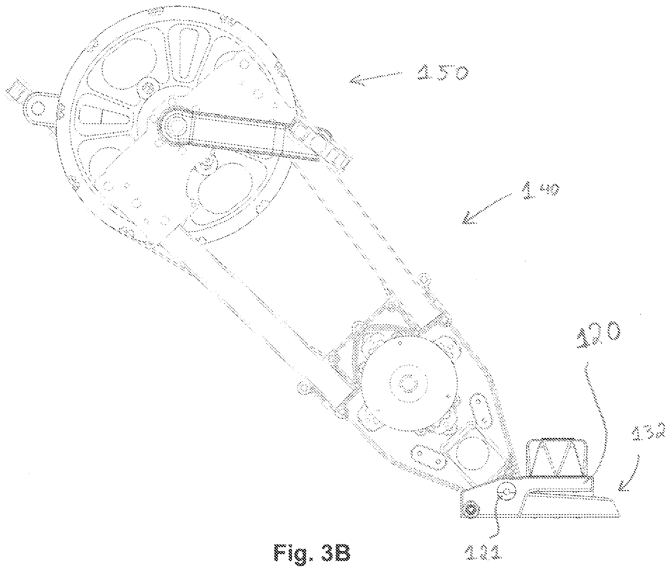

Figures 3A to 3B are similar to Figures 1A and 1B, except that the guide rail 110 has been hidden. The sliding piece 120 is therefore exposed. In the embodiment shown, the sliding piece 120 includes an outward facing protrusion 121 implemented as a pin. This protrusion 121 is used for locking the sliding piece 120 to the guide rail 110 by insertion into the perforation 114 mentioned above while referring to Figure 2A.

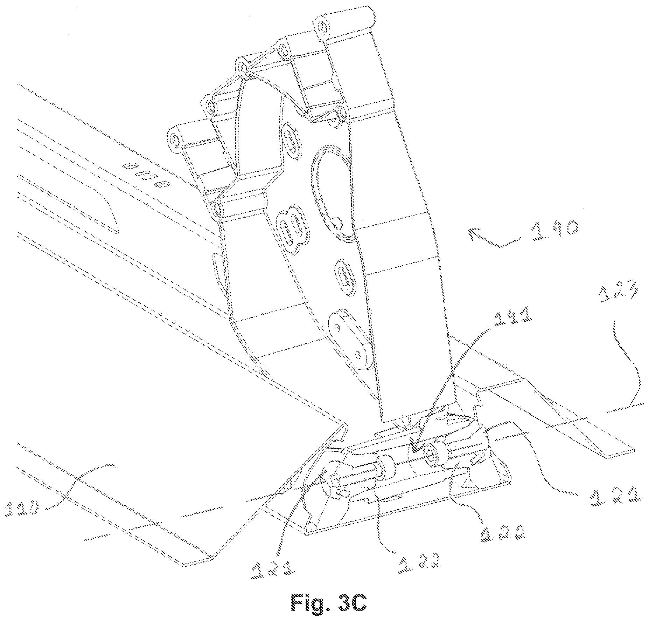

Figure 3C shows a cross-sectional view of the guide rail 110 combined with a crosscut of the sliding piece 120 at the position of the outward facing protrusions 121.

The sliding piece 120 is at a position of the guide rail 110 where the outward facing protrusions 121 of the sliding piece 120 are in alignment with corresponding perforations 114 on the lateral surfaces 113 of the guide rail. Also, the sliding piece 120 is shown in the unlocked mode; that is, the sliding piece 120 can either be moved along the channel 111 or changed to the locked mode, in which the outward facing protrusions 121 are inserted into the corresponding perforations 114. This results in that the sliding piece 120 locks to the shown position on the guide rail 110.

In the embodiment shown in Figure 3C, the sliding piece 120 includes a fixed axis 123 for pivoting the bracket 140 connected to the pedal module 150. The bracket 140 includes a tubular hollow space 141 that is inserted in its two ends by two inward facing protrusions 122 from the sliding piece 120. This embodiment results in that the bracket 140 can pivot on the support provided by the two inward facing protrusions 122. Also, for each inward facing protrusion 122, the sliding piece 120 includes an outward facing protrusion 121, and each pair of inward and outward facing protrusions 121, 122 is coupled by a shared core. This allows achieving an easier manufacturing process.

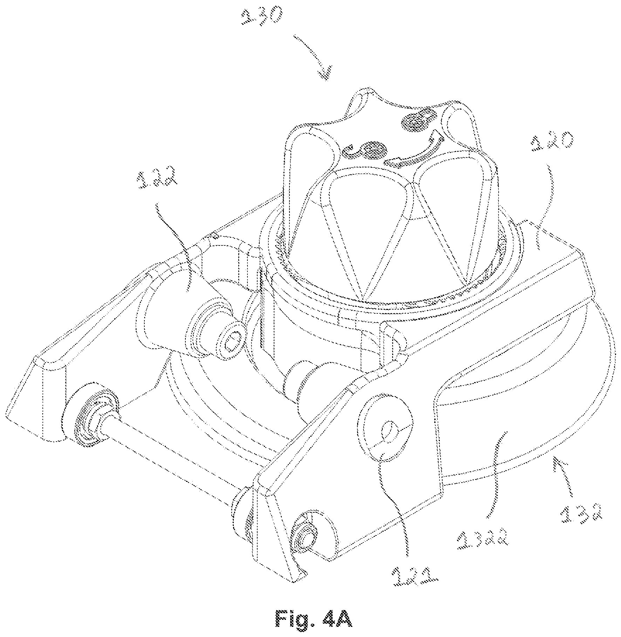

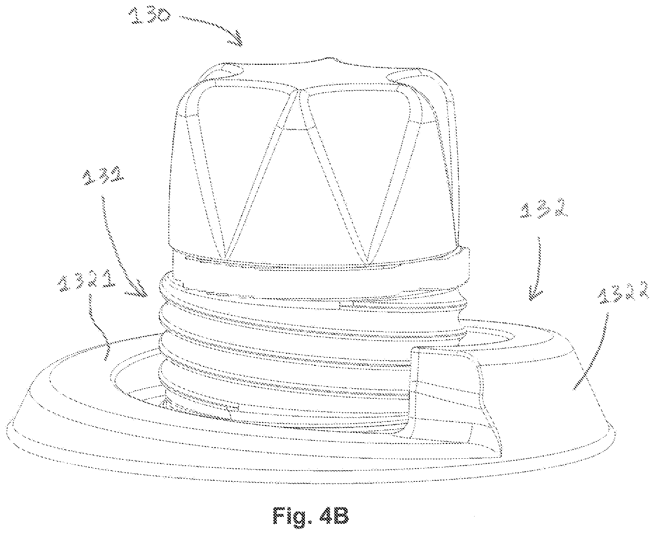

Figures 4A and 4B show a threaded fastener 130 for controlling the distance between the sliding piece 120 and the slidable surface 112 of the channel 111 in the guide rail 110. In Figure 4B, the sliding piece 120 is hidden.

The threaded fastener 130 is operated in a rotational manner and this actuation adjusts the distance between the sliding piece 120 and the slidable surface 112 of the channel 111. The threaded fastener 130 includes a circular base 132 for both sliding and rotating on the slidable surface 112. It also includes outer threads 131 adapted to face corresponding threads on the sliding piece 120. The outer threads 131 are shown in Figure 4B and the arrangement of the sliding piece 120 around these threads 131 is shown in Figure 4A. This arrangement therefore allows the user to rotate the threaded fastener 130 on one side of the sliding piece 120, while, on the other side of the sliding piece 120, the threaded fastener 130 changes the distance to the slidable surface 112.

While taking Figures 4A and 4B into consideration, it is possible to visualise how the sliding piece 120 shown in Figure 3C can be changed to the locked mode: the threaded fastener 130 can be rotated in a clockwise movement so that the sliding piece 120 gets distanced from the slidable surface; during this distancing motion, the outer facing protrusion 121 will, at some moment, enter into the corresponding perforations 114 in the guide rail 110; the threaded fastener can then be tightened further so that the sliding piece 120 gets securely locked in place.

The circular base 132 of the threaded fastener 130 allows rotating the latter on the slidable surface 112 of the channel 111. This degree of freedom exists because the circular design of the base 132 is not blocked from rotating by the lateral surfaces 113. Also, the circular base 132 includes a conical surface 1322 suitable for sliding against a lateral surface 113 of the channel 111.

Both the diameter of the circular base 132 as well as the inclination of the conical surface 1322 can be configured so that the sliding piece 120 remains centered in the channel 111. In unlocked mode, this effect is advantageous because the sliding piece 120 and threaded fastener 130 can be moved longitudinally along the guide rail 110 with a good sliding quality, in which the outward facing protrusions 121 are kept from contacting the lateral surfaces 113. Also, during the rotation of the threaded fastener 130, the movements caused on the sliding piece 120 have a good insertion quality, in which symmetric outward facing protrusions 121 interact synchronously with the perforations 114 in the channel 111.

The circular base 132 of the threaded fastener 130 includes a helical cut-out 1321 for providing a resting surface for the bracket 140. Thus, the rotation of the threaded fastener 130 also adjusts a distance between the bracket 140 and the slidable surface 112 in the channel 111. Also, the threads 131 of the threaded fastener 130 may be provided with the same screwing pitch as the screwing pitch of the helical cut-out 1321. This causes the supporting effect on the bracket 140 to be synchronised with the distancing actuation on the sliding piece 120.

The guide rail 110 may be produced with polymer parts having suitable frictional properties that allow sliding the sliding piece on the guide rail 110. Some components and surfaces may be provided with the same or additional strength, such as the outward facing protrusions 121.

The device described above allows achieving a scalable manufacturing process. Using parts made mostly of polymers, it is possible to achieve a minimum weight for device. 3D printed parts can be used for the initial series production in order to keep tooling costs to a minimum. Once the production volume increases, the elements of the device can be fabricated with injection moulding instead.

The following advantages are observed in the device described above:
- to suit a wide range of cyclists, antroposofic range from less than 5 to more than 95 percentile.
- intuitive and self-explanatory control of pedalling position
- quick and tool-less adjustment
- low weight
- low cost to manufacture, even in low volume series production
- robust locking mechanism and capable of handling high loads
- zero play when locked in position
- compensate for wear and deflection
- allows use of 3D printed plastic parts

### Reference numerals

- 100: device
- 110: guide rail
111 channel
112 slidable surface
113 lateral surface
114 perforation

- 120: sliding piece
121 outward facing protrusion
122 inward facing protrusion
123 fixed axis for pivoting

- 130: threaded fastener
- 131: threads
- 132: circular base
1321 helical cut-out
1322 conical surface

- 140: bracket
141 hollow space

- 150: pedal module

## Claims

1. A device (100) for adjusting the distance between a pedal module (150) and a seat of a human-powered vehicle, the device (100) comprising:
- a guide rail (110) adaptable to be fixed relative to the seat; and
- a sliding piece (120) for supporting the pedal module (150), the sliding piece (120) being adapted to slide on the guide rail (110), and
wherein the sliding piece (120) is lockable to the guide rail (110) on at least one position of the guide rail (110),
wherein the guide rail (110) comprises a perforation (114) and the sliding piece (120) comprises an outward facing protrusion (121) for fastening the sliding piece (120) to the perforation's position on the guide rail (110), and
**characterised in that** the outward facing protrusion (121) is positioned on the sliding piece (120) so as to be inserted into the perforation (114) due to an increase in distance between the sliding piece (120) and a slidable surface (112) of the guide rail (110).

2. Device according to claim 1, wherein the guide rail comprises a channel having an elongated surface for the sliding piece to slide on.

3. Device according to the previous claim, wherein the channel comprises two lateral surfaces slopped inwardly with an angle between 10 and 60 degrees such that the channel embraces the sliding piece.

4. Device according to claim 1, wherein the perforation comprises a wider edge facing the outward facing protrusion.

5. Device according to any of the preceding claims, comprising a threaded fastener for engaging corresponding threads on the sliding piece and actuate on a slidable surface of the guide rail, so that the distance between the sliding piece and the slidable surface is adjustable by the threaded fastener.

6. Device according to claim 5, wherein the threaded fastener comprises a circular base with a surface for both sliding and rotating on the guide rail.

7. Device according to claim 6, wherein the circular base comprises a conical surface for sliding against a lateral surface of the guide rail.

8. Device according to any of the preceding claims, wherein the sliding piece comprises a fixed axis for pivoting a bracket adaptable to support the pedal module.

9. Device according to claim 8, wherein the sliding piece comprises two inward facing protrusions, each protrusion being adapted to couple a corresponding hollow space in the bracket so as to provide the fixed axis for pivoting.

10. Device according to claim 9, wherein, for each inward facing protrusion, the sliding piece comprises an outward facing protrusion according to any of the claims 4 to 5, each pair of inward and outward facing protrusions being coupled by a shared core.

11. Device according to any of the claims 6 to 7 and to any of the claims 8 to 10, wherein the circular base comprises a helical cut-out for providing a resting surface for the bracket so that the rotation of the threaded fastener also adjusts a distance between the bracket and the guide rail.

12. Device according to claim 11, wherein the thread fastener comprises threads having the same screwing pitch as the screwing pitch of the helical cut-out.

13. Device according to any of the preceding claims, wherein the guide rail is adaptable to be fixed to the vehicle so that it is fixed relative to the seat.

14. Device according to any of the preceding claims, wherein the pedal module comprises two pedals for cycling.

15. Device according to claim 14, wherein the pedal module comprises an electrical generator for converting a cycling motion from the two pedals to electricity.

16. A human-powered vehicle **characterised in that** it comprises a device (100) according to any of the preceding claims.

17. A velomobile or a recumbent bicycle **characterised in that** it comprises a device (100) according to any of the claims 1 to 15.

## Patentansprüche

1. Vorrichtung (100) zur Einstellung des Abstands zwischen einem Pedalmodul (150) und einem Sitz eines von Menschen angetriebenen Fahrzeugs, wobei die Vorrichtung (100), umfasst:
- eine Führungsschiene (110), die anpassungsfähig ist, um relativ zum Sitz befestigt zu werden; und
- ein Gleitstück (120) zum Tragen des Pedalmoduls (150), wobei das Gleitstück (120) angepasst ist, um auf der Führungsschiene (110) zu gleiten, und
wobei das Gleitstück (120) an der Führungsschiene (110) in mindestens einer Position der Führungsschiene (110) verriegelbar ist,
wobei die Führungsschiene (110) eine Perforation (114) umfasst und das Gleitstück (120) einen nach außen weisenden Vorsprung (121) zur Befestigung des Gleitstücks (120) an der Position der Perforation auf der Führungsschiene (110) umfasst, und
**dadurch gekennzeichnet, dass** der nach außen gerichtete Vorsprung (121) auf dem Gleitstück (120) angeordnet ist, so dass es in die Perforation (114) aufgrund einer Vergrößerung des Abstands zwischen dem Gleitstück (120) und einer Gleitfläche (112) der Führungsschiene (110) eingeführt werden kann.

2. Vorrichtung nach Anspruch 1, wobei die Führungsschiene einen Kanal umfasst, der eine längliche Oberfläche aufweist, auf der das Gleitstück gleiten kann.

3. Vorrichtung nach dem vorstehenden Anspruch, wobei der Kanal zwei Seitenflächen umfasst, die in einem Winkel zwischen 10 und 60 Grad nach innen geneigt sind, so dass der Kanal das Gleitstück umschließt.

4. Vorrichtung nach Anspruch 1, wobei die Perforation einen breiteren Rand umfasst, der dem nach außen gerichteten Vorsprung zugewandt ist.

5. Vorrichtung nach einem der vorstehenden Ansprüche, umfassend ein Gewindebefestigungselement, das in entsprechende Gewinde auf dem Gleitstück eingreift und auf eine Gleitfläche der Führungsschiene einwirkt, so dass der Abstand zwischen dem Gleitstück und der Gleitfläche durch das Gewindebefestigungselement einstellbar ist.

6. Vorrichtung nach Anspruch 5, wobei das Gewindebefestigungselement eine kreisförmige Basis mit einer Oberfläche zum Gleiten und Drehen auf der Führungsschiene umfasst.

7. Vorrichtung nach Anspruch 6, wobei die kreisförmige Basis eine konische Oberfläche zum Gleiten gegen eine Seitenfläche der Führungsschiene umfasst.

8. Vorrichtung nach einem der vorstehenden Ansprüche, wobei das Gleitstück eine feste Achse für das Schwenken einer Halteklammer umfasst, die anpassungsfähig ist, um das Pedalmodul zu tragen.

9. Vorrichtung nach Anspruch 8, wobei das Gleitstück zwei nach innen gerichtete Vorsprünge umfasst, wobei jeder Vorsprung angepasst ist, um einen entsprechenden Hohlraum in der Halteklammer zu koppeln, um die feste Achse für das Schwenken zu bilden.

10. Vorrichtung nach Anspruch 9, wobei das Gleitstück für jeden nach innen gerichteten Vorsprung einen nach außen gerichteten Vorsprung nach einem der Ansprüche 4 bis 5 umfasst, wobei jedes Paar nach innen und nach außen gerichteter Vorsprünge durch einen gemeinsamen Kern gekoppelt ist.

11. Vorrichtung nach einem der Ansprüche 6 bis 7 und nach einem der Ansprüche 8 bis 10, wobei die kreisförmige Basis einen schraubenförmigen Ausschnitt umfasst, um eine Auflagefläche für die Halteklammer bereitzustellen, so dass durch die Drehung des Gewindebefestigungselements auch ein Abstand zwischen der Halteklammer und der Führungsschiene angepasst wird.

12. Vorrichtung nach Anspruch 11, wobei das Gewindebefestigungselement ein Gewinde mit der gleichen Gewindesteigung wie die Gewindesteigung des schraubenförmigen Ausschnitts umfasst.

13. Vorrichtung nach einem der vorstehenden Ansprüche, wobei die Führungsschiene anpassungsfähig ist, um an ein Fahrzeug befestigt zu werden, so dass er relativ zum Sitz fixiert ist.

14. Vorrichtung nach einem der vorstehenden Ansprüche, wobei das Pedalmodul zwei Pedale zum Radfahren umfasst.

15. Vorrichtung nach Anspruch 14, wobei das Pedalmodul einen elektrischen Generator zur Umwandlung einer Fahrradbewegung von den beiden Pedalen in Elektrizität umfasst.

16. Von Menschen angetriebenes Fahrzeug, **dadurch gekennzeichnet, dass** es eine Vorrichtung (100) nach einem der vorstehenden Ansprüche umfasst.

17. Velomobil oder Liegerad, **dadurch gekennzeichnet, dass** es eine Vorrichtung (100) nach einem der Ansprüche 1 bis 15 umfasst.

## Revendications

1. Dispositif (100) destiné à régler la distance entre un module de pédale (150) et un siège d'un véhicule à propulsion humaine, le dispositif (100) comprenant :
- un rail de guidage (110) adaptable pour être fixé par rapport au siège ; et
- une pièce coulissante (120) destinée à supporter le module de pédale (150), la pièce coulissante (120) étant adaptée pour coulisser sur le rail de guidage (110), et
dans lequel la pièce coulissante (120) peut être verrouillée sur le rail de guidage (110) sur au moins une position du rail de guidage (110),
dans lequel le rail de guidage (110) comprend une perforation (114) et la pièce coulissante (120) comprend une saillie orientée vers l'extérieur (121) pour fixer la pièce coulissante (120) sur la position de perforation sur le rail de guidage (110), et
**caractérisé en ce que** la saillie orientée vers l'extérieur (121) est positionnée sur la pièce coulissante (120) de manière à être insérée dans la perforation (114) du fait d'une augmentation de distance entre la pièce coulissante (120) et une surface coulissante (112) du rail de guidage (110).

2. Dispositif selon la revendication 1, dans lequel le rail de guidage comprend un canal présentant une surface allongée pour que la pièce coulissante puisse coulisser dessus.

3. Dispositif selon la revendication précédente, dans lequel le canal comprend deux surfaces latérales inclinées vers l'intérieur avec un angle entre 10 et 60 degrés de telle sorte que le canal englobe la pièce coulissante.

4. Dispositif selon la revendication 1, dans lequel la perforation comprend un bord plus large en regard de la saillie orientée vers l'extérieur.

5. Dispositif selon l'une quelconque des revendications précédentes, comprenant un élément de fixation fileté destiné à venir en prise dans des filetages correspondants sur la pièce coulissante et à s'actionner sur une surface coulissante du rail de guidage, de sorte que la distance entre la pièce coulissante et la surface coulissante puisse être réglée par l'élément de fixation fileté.

6. Dispositif selon la revendication 5, dans lequel l'élément de fixation fileté comprend une base circulaire avec une surface à la fois pour coulisser et tourner sur le rail de guidage.

7. Dispositif selon la revendication 6, dans lequel la base circulaire comprend une surface conique pour coulisser contre une surface latérale du rail de guidage.

8. Dispositif selon l'une quelconque des revendications précédentes, dans lequel la pièce coulissante comprend un axe fixe de pivotement d'une console adaptable pour supporter le module de pédale.

9. Dispositif selon la revendication 8, dans lequel la pièce coulissante comprend deux saillies orientées vers l'intérieur, chaque saillie étant adaptée à coupler un espace creux correspondant dans la console de manière à fournir l'axe fixe de pivotement.

10. Dispositif selon la revendication 9, dans lequel, pour chaque saillie orientée vers l'intérieur, la pièce coulissante comprend une saillie orientée vers l'extérieur selon l'une quelconque des revendications 4 à 5, chaque paire de saillies orientées vers l'intérieur et vers l'extérieur étant couplée par un noyau partagé.

11. Dispositif selon l'une quelconque des revendications 6 à 7 et selon l'une quelconque des revendications 8 à 10, dans lequel la base circulaire comprend une découpe hélicoïdale destinée à fournir une surface de repos pour la console de sorte que la rotation de l'élément de fixation fileté règle également une distance entre la console et le rail de guidage.

12. Dispositif selon la revendication 11, dans lequel l'élément de fixation fileté comprend des filetages présentant le même pas de vissage que le pas de vissage de la découpe hélicoïdale.

13. Dispositif selon l'une quelconque des revendications précédentes, dans lequel le rail de guidage peut être adapté pour être fixé au véhicule de sorte qu'il soit fixé par rapport au siège.

14. Dispositif selon l'une quelconque des revendications précédentes, dans lequel le module de pédale comprend deux pédales pour le cyclisme.

15. Dispositif selon la revendication 14, dans lequel le module de pédale comprend un générateur électrique destiné à convertir en électricité un mouvement de cyclisme à partir des deux pédales.

16. Véhicule à propulsion humaine **caractérisé en ce qu'**il comprend un dispositif (100) selon l'une quelconque des revendications précédentes.

17. Vélomobile ou vélo couché **caractérisé en ce qu'**il comprend un dispositif (100) selon l'une quelconque des revendications 1 à 15.
